# EUROPEAN PATENT SPECIFICATION

(11) **EP 4 291 695 B1**
(45) Date of publication and mention of the grant of the patent: **29.04.2026**
(21) Application number: 22752376.8
(22) Date of filing: 08.02.2022
(51) Int. Cl.: C25B 9/05, C25B 1/04, C25B 15/02

(54) **HYDROGEN PRODUCTION PLANT AND METHOD OF ITS OPERATION**
WASSERSTOFFPRODUKTIONSANLAGE UND VERFAHREN ZU IHREM BETRIEB
INSTALLATION DE PRODUCTION D'HYDROGÈNE ET SON PROCÉDÉ DE FONCTIONNEMENT

(30) Priority: 10.02.2021 DK PA202100143
(43) Date of publication of application: 20.12.2023
(73) Proprietor: Stiesdahl Hydrogen A/S, 7323 Give (DK)
(72) Inventor: STIESDAL, Henrik, 5000 Odense C (DK); SCHIBSBYE, Karsten, 7000 Fredericia (DK)
(74) Representative: Medenwaldt, Robin
(86) International application number: PCT/DK2022/050021
(87) International publication number: WO 2022/171254

(56) References cited:
- EP-A1- 1 473 386
- EP-A1- 2 180 087
- WO-A1-2020/127537
- JP-A- 2007 100 204
- US-A- 3 839 091
- US-A- 5 507 309
- US-A1- 2004 072 040
- US-A1- 2005 072 688
- US-A1- 2010 051 473

## Description

### FIELD OF THE INVENTION

The present invention relates to a hydrogen production plant comprising an electrolysis system for production of hydrogen by electrolysis of water. It also relates to a method of its operation. In particular, it relates to a plant and method according to the independent claims.

### BACKGROUND OF THE INVENTION

In electrolysis systems for production of hydrogen, water is dissociated into hydrogen and oxygen, which are released as H₂ gas and O₂ gas from the cathode and anode, respectively, on either side of an ion-permeable membrane in a hydrolysis cell. The released hydrogen is stored under pressure in buffer containers for later use, for example for use in fuel cells or for the production of other types of chemicals, for example ammonia or methanol, also called Power-to-X fuels. In order to increase efficiency, electrolysers are typically provided as interconnected stacks of cell units, each cell unit comprising separator, anode, membrane, and cathode.

Some types of electrolysis systems comprise alkaline electrolysers, which typically use an aqueous potassium hydroxide (KOH) solution as the electrolyte, although, also alternatives are available, such as sodium hydroxide (NaOH). Other electrolysis systems work on an acidic basis.

Various electrolyzers are disclosed in EP1473386A1, EP180087A1, US2010/0051473, and JP2007/100204A.

Electrolyzers typically operate as a balanced pressure system, where O₂ and H₂ are discharged at the same pressure. The pressure balance must be precisely controlled in order to minimize gas leakage across the membrane and reduce the risk of damage to the membrane, which often implies complex control systems. Maintaining predetermined pressure levels on opposite sides of the membrane in order to prevent gas leakage over the membrane and membrane rupture or other damage is a challenge and requires careful control during operation. Typically, the gas pressures for H₂ gas and O₂ gas in the gas release systems are measured and adjusted by control valves, which are linked to a common controller. Pressure control is the more challenging when electrolysis systems are working under pressurized conditions with pressures of tens or hundreds of bar (1 bar = 100 kPa), as already a small percentage of variations of such high pressure may lead to damage in the system, in particular damage to the membranes.

US2004072040 describes a regenerative electrolyzer/fuel cell system comprising a pressurized hydrogen tank and a pressurized oxygen tank. An electrolyzer is placed within the hydrogen tank, and hydrogen is expended from the electrolyzer through a hydrogen line to the hydrogen tank. Oxygen is expended from the electrolyzer through an oxygen line to the oxygen tank. Each of the tanks are connected to separate sides of an accumulator and separate sides of a differential pressure relief valve. Both tanks are further connected to a fuel cell. The accumulator has a first port that is connected to the hydrogen tank and a second port that is connected to the oxygen tank. The accumulator is a cylindrical container having a diaphragm that is connected to the housing of the accumulator. The diaphragm separates the hydrogen gas from the oxygen gas and is capable of shifting relative positions to change the relative volume of the respective gases. By varying the volume of the gases to each other, the pressure can be adjusted. Although, this system provides a pressure adjustment, this system does not provide a control system where the relative volume changes of the gases are monitored.

It would be desirable to have a pressure control system that is reliable but simple as an alternative to existing complex pressure control systems.

### DESCRIPTION / SUMMARY OF THE INVENTION

It is therefore an objective of the invention to provide an improvement in the art. In particular, it is an objective to provide an improved hydrogen production plant with an electrolysis system. It is a further objective to provide an alternative and improved system and method for controlling adjustment of pressure between oxygen gas and hydrogen gas in the electrolysis system. An even further objective is to provide a pressure control system that is reliable but simple. One or more of these objectives is/are achieved by systems and methods as described in the following description and in the claims.

In short, the invention has the following main characteristics. A hydrogen production plant is provided in which an electrolysis system splits water into hydrogen and oxygen gas. The hydrogen gas is accumulated under pressure in a buffer container that also contains the electrolysis system, which is operated under similar pressure. For controlling pressure between the oxygen and hydrogen gas, an expansion vessel is provided with a flexible part separating the hydrogen gas from the oxygen gas.

The movement of the flexible part is recorded by a sensor system, for example an optical sensor, optionally a camera, the signals of which are used by an automated control system for regulating oxygen flow out of the electrolysis system. The system is simple and cost effective in production, though efficient and reliable.

Further details and advantages will appear from the following description.

A hydrogen production plant is provided that comprises an electrolysis system with one or more hydrolysis cells, in which water is split into hydrogen gas and oxygen gas by electrolysis. The hydrolysis cell comprises an ion-permeable membrane, located between electrodes, to which a voltage is applied, typically on the order of 1.7 V per cell, for causing hydrolysis of water. For example, the hydrolysis cells use an alkaline solution into which the electrodes are immersed, and produced hydroxide anions cross the ion-permeable membrane.

The hydrogen produced by the electrolysis system is received, accumulated, and stored under pressurized conditions in a buffer container. The term pressurised is used for pressure levels well above ambient pressure, for example tens of bar (1 bar = 100 kPa) above ambient pressure, optionally in the range of 30-40 bar or higher.

The plant presented herein is peculiar in that the electrolysis system is located inside the buffer container and operating at elevated pressure equal to the gas pressure of the pressurised hydrogen accumulated in the buffer container. An advantage is that the hydrogen from the electrolysis system can flow freely into the buffer container without a necessity of pressurizing pumps and pressure valves between the electrolysis system and the buffer container.

During operation of the electrolysis system, the produced hydrogen is added into the buffer container. After start of the operation, the pressure inside the buffer container gradually rises with the increasing accumulation of hydrogen and until the electrolysis system is stopped or hydrogen is released from the buffer container.

The electrolysis plant is operating at the same pressure as the hydrogen in the buffer container also during phases where pressure is rising due to accumulation of hydrogen and during phase where pressure is decreasing due to release of hydrogen from the buffer container. An advantage of such a system is that the volume in the container around the electrolysis system is used for hydrogen storage, instead of or in addition to other buffer containers that are remote from the electrolysis system. Pressure equalization between the hydrogen gas inside the electrolysis cell and inside the buffer container is also simple and self-adjusting and does not require specific pressure control devices, which is advantageous.

An actuator-driven oxygen-flow control valve, for simplicity herein called oxygen valve, is flow-connected by an oxygen conduit to the electrolysis system. Oxygen gas flows from the electrolysis system through an oxygen outlet into the oxygen conduit and is then released from the plant through the oxygen valve. An automated operation control system is functionally connected to the actuator of the oxygen valve for automated control of release of the oxygen gas through the oxygen valve.

By controlled release of oxygen gas through the oxygen valve, the pressure difference between the oxygen and the hydrogen gas is controlled and so also the pressure difference between the opposite sides of the ion-permeable membrane inside the electrolysis cell. Typically, the pressure difference is targeted to be zero or close to zero in order to avoid pressure load on the membrane. In practice, the desired pressure difference is maintained within an interval of acceptable pressure levels. For example, if the pressure is getting too large on the oxygen side of the membrane in the electrolysis cell, the control system causes increased oxygen release through the oxygen valve.

The oxygen conduit is flow-connected to an expansion vessel that has a variable volume. The term expansion vessel is used here for the oxygen-containing part of a vessel arrangement. For example, the expansion vessel is a flexible, optionally resilient bladder or tube, optionally on a support, where the bladder or tube expands when the pressure of the oxygen gas inside the bladder or tube rises relative to the pressure of the hydrogen gas around the bladder or tube. The volume adjusts in accordance with pressure differences between oxygen gas inside the expansion vessel and the hydrogen gas in the buffer container. When the pressure difference changes, also the volume of the oxygen gas in the expansion vessel changes, so that the volume and its change is an indicator for the pressure difference and its change. This is used for controlling the pressure difference according to the following.

A sensor system is used for recording changes in the volume of the expansion vessel, for example an optical sensor system comprising a camera, or a displacement sensor system, optionally including inductive, capacitive, or ultrasonic sensing technologies. The control system receives signals from the sensor system continuously so that the volume changes of the expansion vessel can be recorded and used by the control system for controlling the pressure difference. On the basis of the received signals and further programmed parameters, the volume of the expansion vessel is maintained within a predetermined range of volume levels by regulating the oxygen gas flow through the control valve. By maintaining the volume, correspondingly, the pressure difference is maintained, as the volume is indicative for the pressure difference.

Whereas the expansion vessel above has been described as a flexible bladder or tube, which expands upon rise of pressure in the oxygen gas, it is not necessary that the entire expansion vessel is made of a flexible material. It is sufficient, if the expandable enclosure of the expansion vessel, apart from a solid portion, comprises a movable part, which when moving results in a volume change in the expansion vessel. Important, in this case, is that the sensor system comprises a sensor, for example optical sensor, which repeatedly records positions of the movable part. Further important is that the position of the movable part is indicative for the volume of the expansion vessel. The position-indicative signals from the sensor are then received by the control system and used for adjusting and maintaining the positions of the movable part within a programmed range of positions. This is achieved by the control system by automated adjustment of the flow of oxygen gas through the oxygen valve.

Optionally, for additional safety, an alarm system is provided for preventing damage to the plant when the pressure difference rises above a maximum level. For example, if the oxygen valve stops operating because the actuator is malfunctioning, or if an error in the control system fails operating the oxygen valve properly, the oxygen pressure may rise above acceptable limits with the risk of the expansion vessel releasing oxygen into the buffer container. The latter is crucial and implies an increased risk for fire and explosion, why high safety measures are necessary.

Accordingly, if the alarm system is activated, the plant is configured for entering an emergency program, which may stop hydrogen production. It may additionally or alternatively lead to venting oxygen from the expansion vessel and/or hydrogen from the buffer container.

As a measure, the alarm system is activated when the volume of the expansion vessel rises above a certain maximum level, for example if the bladder or tube becomes too much inflated with oxygen.

In some embodiments, a simple, yet efficient, mechanical system has been developed for such alarm system. In this case, a mechanical connector, for example an arm, is connecting the alarm switch with the movable part of the expansion vessel when the movable part moves beyond certain predetermined limits. For example, when the movable part moves beyond a maximum allowable position, the connector is activating the alarm switch, which causes the plant to enter the emergency program.

In some embodiments, the expansion vessel is located inside the buffer container, although this is not strictly necessary, as the expansion vessel can also be flow-connected to the volume inside the buffer container by conduits, typically pipes.

In order to reduce the risk for fire and explosion, an oxygen detector is used for measuring the oxygen concentration inside the buffer container. If the oxygen concentration inside the gas in the buffer container rises beyond predetermined limits, an alarm is given. Optionally, the plant enters the emergency program discussed above.

### SHORT DESCRIPTION OF THE DRAWINGS

The invention will be explained in more detail with reference to the drawing, where
FIG. 1 illustrates principles of the production plant;
FIG. 2 illustrates an alternative embodiment of an expansion vessel formed by a collapsible tube;
FIG. 3 illustrates an alternative embodiment of an expansion vessel and detector system;
FIG. 4 illustrates an expansion vessel external to the buffer container.

### DETAILED DESCRIPTION / PREFERRED EMBODIMENT

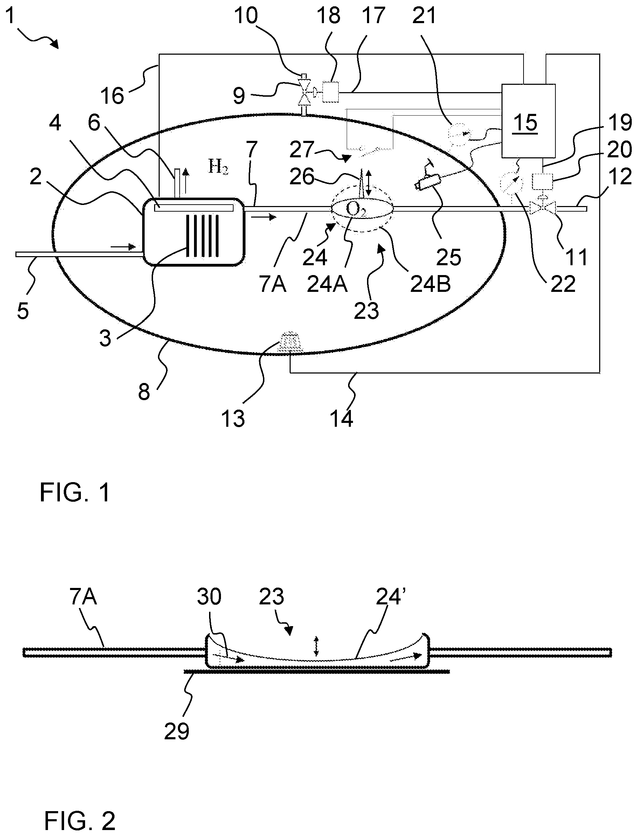

FIG. 1 illustrates a production plant 1 for production of hydrogen gas. The plant 1 comprises an electrolysis system 2 with one or more electrolyses cells 3, typically a stack of cells 3, and a necessary conduit system 4 for guidance of the fluids through the system 2. The electrolysis system 2 is receiving water through a water inlet conduit 5.

By applying a voltage across a membrane in the hydrolysis cell 3, hydrogen and oxygen are produced inside the electrolysis cell 3, and the corresponding gases leave the electrolysis system 2 through a hydrogen gas outlet 6 and an oxygen gas outlet 7, respectively.

If the electrolysis cell 3 contains a solution, for example an alkaline solution, into which the electrodes are immersed, the liquid is prevented from leaving the electrolysis system 2 by using corresponding separators in the electrolysis system 2.

As illustrated in FIG. 1, the electrolysis system 2 is provided inside a closed buffer container 8. The hydrogen from the electrolysis cell 3 is released as gas through the hydrogen outlet 6 directly into the buffer container 8 and accumulated inside the buffer container 8 under pressurised conditions before released from the buffer container 8 through a hydrogen valve 9 and a hydrogen release conduit 10 for consumption, for example for electricity production in fuel cells.

Oxygen is released from the electrolysis system 2 through an oxygen valve 11 and an oxygen release conduit 12.

As the oxygen gas flows from the oxygen outlet 7 in a conduit 7A through the buffer container 8 in which hydrogen gas is accumulated, care must be taken to prevent explosion in the event of leaks. Oxygen that is leaking into the buffer container 8 should be discovered at an early stage. For this reason, an oxygen detector 13 is provided inside the buffer container 8. Through a corresponding electrical or electronical signal line 14, the oxygen detector 13 is connected to a control system 15, which in case of detection of oxygen above a predetermined level takes measures for preventing fire and explosion, for example shutting down the electrolysis system 2. For the latter, the control system 15 is operationally connected through a signal line 16 with the electrolysis system 2.

The control system 15 is stylistically illustrated as a single unit but is typically a group of various interacting control units, including one or more computers, or optionally comprising programmable logic controllers, PLC.

In case of the detector 13 signalling elevated oxygen levels in the buffer container 8, the control system 15 goes through a sequence of pre-programmed actions, for example shutting down the electrolysis system 2 and/or venting the buffer container 8 as well as potentially sending alarm signals to dedicated personnel.

Through a corresponding signal line 17, the control system 15 is also operationally connected to an actuator 18 of the hydrogen valve 9 and through a corresponding further signal line 19 to another actuator 20 of the oxygen valve 11. The control system 15 is also functionally connected to a hydrogen pressure detector 21 that measures the gas pressure inside the buffer container 8 and to an oxygen pressure detector 22 that measures the oxygen pressure in the conduit 7A upstream of the oxygen valve 11. The hydrogen pressure detector 21 could also be located to the upstream side of the hydrogen valve 9.

Operation of the electrolysis system 2 and release of gases through the valves 10, 11 are controlled by the control system 15 in accordance to pre-programmed instructions and on the basis of measured parameters, including pressure from the pressure detectors 21, 22, and potentially on the basis of external instructions for operation of the production plant 1, including commands for release of gases.

For start of production of hydrogen in the production plant 1, the control system 15 causes the electrolysis system 2 to start operating, and the hydrogen from the hydrogen outlet 6 is released into the buffer container 8. The buffer container 8 is potentially at atmospheric pressure at the start. During production of hydrogen, the gas pressure in the buffer container 8 rises in accordance with the continuous release of hydrogen into the buffer container 8. As the electrolysis system 2 is inside the pressurised buffer container 8, the pressure inside the electrolysis cell 3 follows the pressure of the buffer container 8. For example, the pressure is increased to tens of bar (1 bar = 100 kPa), optionally in the range of 10-200 bar.

On the one hand, such a system has a number of advantages, primarily compactness by omission of separate hydrogen tanks. On the other hand, it implies challenges for precise control of the pressure on opposite sides of the membranes in the electrolysis cells 3 and, correspondingly, differences of pressure on in the hydrogen gas and the oxygen gas. It is especially challenging because the system operates at high pressure so that even a small percentage of pressure deviation across the ion-permeable membrane implies large forces acting on the membrane with a corresponding risk of proper operation or even failure of the electrolysis cell 3.

In order to provide precise pressure control, the following system has been found useful, as it is not only precise but also simple and highly reliable.

The oxygen conduit 7A inside the buffer container 8 is flow connected to an expansion vessel 23.

As illustrated, the oxygen from the oxygen outlet 7 flows through the oxygen conduit 7A to an expansion vessel 23 and from there to the oxygen release valve 11.

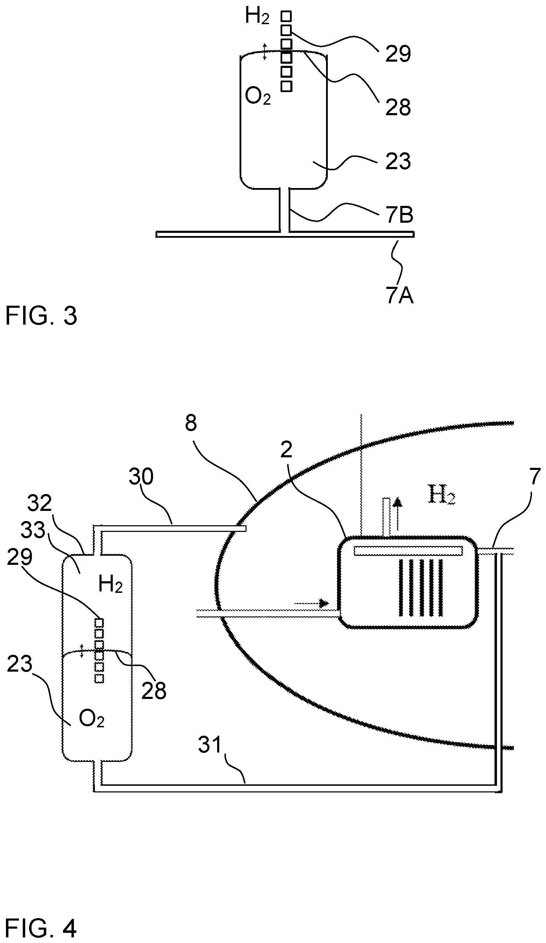

Alternatively, the expansion vessel 23 is connected to the oxygen conduit 7A through a branch, for example the branch being connected to the oxygen conduit 7A by a T-piece connector, an example hereof is illustrated in FIG. 3.

In FIG. 1, the expansion vessel 23 is illustrated as comprising a flexible bladder 24, the size of which increases from a first volume 24A to a second volume 24B when the pressure of the oxygen gas inside the bladder 24 increases relatively to the hydrogen gas pressure in the surrounding volume in the buffer container 8.

Optionally, the bladder 24 is made of a resilient material, which, however, is not necessary and depends on the preferences and the specific implementation of the principle explainer herein, in particular the desired pressure difference.

The change of size of the expansion vessel 23 or the change of position of a part of the expansion vessel 23 is measured by a sensor system.

With reference to FIG. 1, an example of such sensor system employs a camera 25 delivering images on which image analysis is performed and from which movements are detected.

Other non-limiting examples of sensors include laser scanners, one-dimensional optical arrays, or mechanical devices that are moved by the expanding or moving part of the expansion vessel 23.

The signal from the sensor, in FIG. 1 exemplified as a camera 25 with corresponding image analysis, is received by the control system 15 and used for adjusting operational parameters or potentially even stopping operation.

As an option, for additional safety, a mechanical-assisted alarm feature is employed, as described in the following. The movement of a part of the expansion device 23 leads to a movement of a mechanical arm 26, which when reaching a certain position, activates an alarm switch 27, the alarm signal of which is used by the control system 15 to take additional precautionary measures, for example shutting down the electrolysis system 2 and/or venting gas from the system.

For example, for redundancy and high safety, the alarm signal from the alarm switch 27 triggers the control system 15 to switch into an emergency program that overrules certain control units, for example programmed operation computers, and may send separate instructions for closing down and venting the system as well as sending alarm signals to dedicated personnel. This way, risk for damage and explosion is minimized in case of malfunctioning computer software, where a computer system that does not initiate the necessary precautionary measures under critical conditions.

Although, the arm 26 is drawn vertically, it can be arranged in other angles, such as horizontally, as desired.

This principle of a flexible bladder 24 is chosen here for ease of illustration, however, other embodiments are possible, as explained in the following.

FIG. 2 illustrates an expansion vessel 23 formed as a tube 24' that is provided on a support 29. Oxygen flows from the oxygen conduit 7A into the tube 24' and from the tube 24' into a continuation of the oxygen conduit 7A towards the oxygen valve 11, which was shown in FIG. 1. The tube 24' is an alternative embodiment and located in the buffer container 8 similarly to the expansion vessel 23 in form of a bladder 24 in FIG. 1.

When the pressure of the oxygen gas increases, the upper part of the tube 24' in FIG. 2 is lifted upwards, which is detected by a detector, for example a camera 25, as illustrated in FIG. 1.

The precision of the pressure measurement depends on the size, weight, and elasticity of the material of the bladder in FIG. 1 or the tube in FIG. 2. This dimensioning is important but within the capabilities of the skilled person. The bladder is made of a material capable of preventing any significant gas leakage from the hydrogen side to the oxygen side and in the reverse direction. Relevant materials include single- or multilayer polymer foils, metallized foils, and natural and synthetic rubbers, or combinations thereof, all optionally reinforced with fibres. Alternatively, it is made from thin metal.

FIG. 3 illustrates an expansion vessel 23 that is connected to the oxygen conduit 7A through a side branch 7B. The expansion vessel 23 comprises a flexible vessel membrane 28 that moves in accordance with pressure difference between the O₂ pressure on one side of the vessel membrane 82 and the H₂ pressure in the buffer container 8 on the opposite side. In the exemplified situation in FIG. 3, the vessel membrane 28 bends slightly upwards, which indicates a higher pressure in the oxygen gas inside the expandable vessel 23 than in the hydrogen gas above the vessel membrane 28. A one-dimensional array 29 of optical detectors, in combination with one or more light emitters, are used for determining the position of the vessel membrane 28 in dependence of the pressure difference. Depending on the position of the vessel membrane 28, as measured by the detector array 29, the pressure in the expansion vessel 23 is regulated by the control system 15 through control of the oxygen valve.

Other alternative pressure indicating means are possible within the basic principle, where at least a part of an expansion vessel is moving in dependence of a pressure difference between O₂ in the oxygen conduit 7A and H₂ in the buffer container 8 and where a sensor measures the movement and gives a signal to the control system 15, where the signal indicates an amplitude of the movement which scales with the pressure difference.

Whereas the expansion vessel 23 in FIG. 1-3 was described as being located inside the buffer container 8, it is also possible to provide an expansion vessel 23 outside the buffer container 8, as illustrated in FIG. 4. The expansion vessel 23 comprises an enclosure with oxygen gas one side of a flexible separating vessel membrane 28, while hydrogen gas from the buffer container 8 is in an upper volume 33 on the opposite side of the membrane 28 outside the expansion vessel 23. Notice that the term expansion vessel 23 is used for the oxygen-containing lower part of a general enclosure 32, which in addition to the expansion vessel 23 also comprises an upper volume 33 that contains hydrogen gas.

The hydrogen gas in the upper volume 33 is received through a hydrogen gas line 30 that is connected with the interior volume of the buffer container 8. The oxygen is received from the oxygen outlet 7 or oxygen conduit 7A through an oxygen gas line 31.

Similar to the embodiment of FIG. 3, the flexible vessel membrane 28 moves according to expansion of the oxygen gas in the expansion vessel 23 caused by a pressure difference on opposite sides of the vessel membrane 28. The position and the upwards or downwards movement by the vessel membrane 28 are detected by the sensor array 29, which, in turn, produces a signal used by the control system 15 to regulate the oxygen valve 11, which is shown in FIG. 1.

The type of sensor in FIG. 3 and 4 is only an example, and other types of sensors could be employed alternatively, for example a camera, a laser scanner, or a mechanical arm.

### Reference numbers

1 hydrogen production plant
2 electrolysis system
3 electrolysis cell
4 conduit system in electrolysis system 2
5 water inlet conduit
6 hydrogen gas outlet
7 oxygen outlet
7A oxygen conduit
7B side branch
8 buffer container
9 hydrogen valve
10 hydrogen release conduit downstream of hydrogen valve 9
11 oxygen valve
12 oxygen release conduit downstream of oxygen valve 11
13 oxygen gas detector in buffer container 8
14 signal line from control system 15 to oxygen gas detector 13
15 control system
16 signal line from control system 15 to electrolysis system 2
17 signal line from control system 15 to hydrogen valve 9 actuator 18
18 actuator of hydrogen valve 9
19 signal line from control system 15 to oxygen valve 11 actuator 20
20 actuator of oxygen valve 11
21 hydrogen gas pressure detector
22 oxygen gas pressure detector
23 expansion vessel
24 bladder
24A first volume of bladder 24
24B second volume of bladder 24
24' Tube
25 camera
26 arm
27 switch
28 vessel membrane
29 array of optical detectors
30 hydrogen flow line to buffer container 8
31 oxygen flow line to oxygen outlet 7
32 container with expansion vessel 23 and with second volume 33 that contains hydrogen gas
33 second volume of container 32

## Claims

1. A hydrogen production plant (1) comprising:
- an electrolysis system (2) configured for producing hydrogen gas and oxygen gas by electrolysis;
- a buffer container (8) for receiving, accumulating, and storing the produced hydrogen gas under pressurized conditions;
- an actuator-driven oxygen-flow control valve (11) that is flow-connected by an oxygen conduit (7A) to the electrolysis system (2) for release of oxygen from the electrolysis system (2) through oxygen conduit (7A) and then through the control valve (11),
- an automated operation control system (15) functionally connected to the control valve (11) for automated control of the release of oxygen gas;
wherein
- the electrolysis system (2) is located inside the buffer container (8) and configured for operating at an elevated pressure, relative to the ambient pressure, corresponding to the gas pressure of the pressurised hydrogen accumulated in the buffer container (8),
- the hydrogen production plant (1) further comprises an expansion vessel (23) where the oxygen conduit (7A) is flow-connected to the expansion vessel (23), a volume of which is configured to change by changes in pressure differences between oxygen gas inside the expansion vessel (23) and the hydrogen gas in the buffer container (8);
**characterized in that**
- the plant (1) comprises a sensor system (25) for recording changes of the volume of the expansion vessel (23) and for providing corresponding signals to the control system (15);
- the control system (15) is configured for adjusting the release of oxygen gas through the control valve (11) on the basis of the signals from the sensor system (25, 29) for adjusting the pressure difference according to programmed parameters.

2. A plant according to claim 1, wherein the expansion vessel (23) has an expandable enclosure comprising a movable part (24, 28) that is configured for moving during change of the volume; wherein the sensor system (25, 29) comprises a sensor that records positions of the movable part; and wherein the control system (15) is configured for maintaining the positions of the movable part (24, 28) within a programmed range of positions by adjusting the flow of oxygen gas through the control valve (11).

3. A plant according to claim 2, wherein the sensor system (25, 29) comprises an optical sensor for recording positions of the movable part.

4. A plant according to claim 2 or 3, wherein the movable part (24, 28) is flexible.

5. A plant according to any one of the claims 2-4, wherein an alarm switch (27) is provided and a mechanical connector (26) that is configured for connecting the alarm switch (27) with the movable part (24, 28) and activating the alarm switch (27) when the movable part (24, 28) moves beyond a maximum allowable position, wherein the plant (1) is configured for entering an automated emergency program as a consequence of the activation of the alarm switch (27), the emergency program including at least one of:
- venting oxygen from the expansion vessel (23),
- venting hydrogen from the buffer container (8),
- stopping hydrogen production.

6. A plant according to any one of the claims 2-5, wherein the movable part of the expansion vessel (23) is located inside the buffer container (8).

7. A method of operating an electrolysis system according to any preceding claim, the method comprising
- providing a plant according to any preceding claim,
- during operation of the electrolysis system (2), adding the produced hydrogen gas into the buffer container (8);
- repeatedly recording volume changes of the expansion vessel (23) by the sensor system (25, 29) and providing corresponding signals to the control system (15);
- on the basis of the received signals and programmed parameters, controlling the difference between the pressure of the oxygen gas in the expansion vessel (23) and the pressure of the hydrogen gas in the buffer container (8) by the control system (15) by maintaining the volume of the expansion vessel (23) within a predetermined interval of volume levels by regulating the oxygen gas flow through the control valve (11).

8. A method according to claim 7, wherein the method comprises
- gradually raising the pressure inside the buffer container (8) by adding hydrogen gas to the buffer container (8),
- operating the electrolysis system (2) at the same pressure as inside the buffer container (8) during the gradual increase of the pressure, and
- repeatedly controlling the pressure difference by maintaining the volume of the expansion vessel (23) within a predetermined interval of volume levels by regulating the oxygen gas flow through the control valve (11), during the gradual increase of the pressure.

9. A method according to claim 8, wherein the method comprises repeatedly recording a position of a movable part (24, 28) of an expandable enclosure of the expansion vessel (23), the position being indicative for the volume of the expansion vessel (23), and maintaining the positions of the movable part (24, 28) within a predetermined interval of positions by adjusting the flow of oxygen gas through the control valve (11).

10. A method according to claim 9, wherein the method comprises activating an alarm switch (27) by a mechanical connector (26) that is connecting the alarm switch (27) with the movable part (24, 28) only when the movable part (24, 28) moves beyond a maximum allowable position, and as a consequence of the activation entering an emergency program and causing at least one of:
- venting oxygen from the expansion vessel (23),
- venting hydrogen from the buffer container (8),
- stopping hydrogen production.

## Patentansprüche

1. Eine Wasserstoffproduktionsanlage (1) umfassend:
- ein Elektrolysesystem (2), das zur Erzeugung von Wasserstoffgas und Sauerstoffgas durch Elektrolyse konfiguriert ist;
- ein Pufferbehälter (8) zum Aufnehmen, Sammeln und Speichern des erzeugten Wasserstoffgases unter Druckbedingungen;
- ein durch einen Aktor angetriebenes Sauerstoff-Durchflusssteuerventil (11), das über eine Sauerstoffleitung (7 A) mit dem Elektrolysesystem (2) verbunden ist, um Sauerstoff aus dem Elektrolysesystem (2) durch die Sauerstoffleitung (7 A) und dann durch das Steuerventil (11) abzugeben,
- ein automatisiertes Betriebskontrollsystem (15), das funktional mit dem Steuerventil (11) zur automatisierten Steuerung der Sauerstoffgasabgabe verbunden ist;
wobei
- das Elektrolysesystem (2) sich im Inneren des Pufferbehälters (8) befindet und für den Betrieb bei einem gegenüber dem Umgebungsdruck erhöhten Druck ausgelegt ist, der dem Gasdruck des im Pufferbehälter (8) gespeicherten unter Druck stehenden Wasserstoffs entspricht,
- die Wasserstoffproduktionsanlage (1) ferner ein Ausdehnungsgefäß (23) umfasst, an das die Sauerstoffleitung (7A) angeschlossen ist und dessen Volumen sich durch Änderungen der Druckdifferenz zwischen dem Sauerstoffgas im Ausdehnungsgefäß (23) und dem Wasserstoffgas im Pufferbehälter (8) ändert;
**dadurch gekennzeichnet, dass**
- die Anlage (1) ein Sensorsystem (25) zur Erfassung von Volumenänderungen des Ausdehnungsgefäßes (23) und zur Bereitstellung entsprechender Signale an das Kontrollsystem (15) umfasst;
- das Kontrollsystem (15) so konfiguriert ist, dass es die Freisetzung von Sauerstoffgas durch das Steuerventil (11) auf der Grundlage der Signale des Sensorsystems (25, 29) zur Anpassung der Druckdifferenz gemäß programmierten Parametern regelt.

2. Eine Anlage nach Anspruch 1, wobei das Ausdehnungsgefäß (23) ein dehnbares Gehäuse mit einem beweglichen Teil (24, 28) aufweist, der sich bei Volumenänderungen bewegt; wobei das Sensorsystem (25, 29) einen Sensor umfasst, der die Positionen des beweglichen Teils erfasst; und wobei das Steuerungssystem (15) zum Aufrechterhalten der Positionen des beweglichen Teils (24, 28) innerhalb eines programmierten Positionsintervalls durch Anpassen des Sauerstoffgasstroms durch das Steuerventil (11) konfiguriert ist.

3. Eine Anlage nach Anspruch 2, wobei das Sensorsystem (25, 29) einen optischen Sensor zur Aufzeichnung der Positionen des beweglichen Teils umfasst.

4. Eine Anlage nach Anspruch 2 oder 3, wobei der bewegliche Teil (24, 28) flexibel ist.

5. Eine Anlage nach einem der Ansprüche 2 bis 4, wobei ein Alarmschalter (27) vorgesehen ist und ein mechanischer Verbinder (26), der so konfiguriert ist, dass er den Alarmschalter (27) mit dem beweglichen Teil (24, 28) verbindet und den Alarmschalter (27) aktiviert, wenn sich der bewegliche Teil (24, 28) über eine maximal zulässige Position hinaus bewegt, wobei die Anlage (1) so konfiguriert ist, dass sie infolge der Aktivierung des Alarmschalters (27) in ein automatisiertes Notfallprogramm eintritt, wobei das Notfallprogramm mindestens eine der folgenden Maßnahmen umfasst:
- Ablassen von Sauerstoff aus dem Ausdehnungsgefäß (23),
- Ablassen von Wasserstoff aus dem Pufferbehälter (8),
- Einstellung der Erzeugung von Wasserstoff.

6. Eine Anlage nach einem der Ansprüche 2 bis 5, wobei sich der bewegliche Teil des Expansionsgefäßes (23) innerhalb des Pufferbehälters (8) befindet.

7. Verfahren zum Betreiben eines Elektrolysesystems nach einem der vorhergehenden Ansprüche, wobei das Verfahren folgendes umfasst:
- Bereitstellung einer Anlage gemäß einem der vorhergehenden Ansprüche,
- Zuführung des erzeugten Wasserstoffgases in den Pufferbehälter (8) während des Betriebs der Elektrolyseanlage (2);
- wiederholte Aufzeichnung von Volumenänderungen des Expansionsgefäßes (23) durch das Sensorsystem (25, 29) und Bereitstellung entsprechender Signale an das Steuerungssystem (15);
- Steuerung der Differenz zwischen dem Druck des Sauerstoffgases im Ausdehnungsgefäß (23) und dem Druck des Wasserstoffgases im Pufferbehälter (8) durch das Steuerungssystem (15) auf der Grundlage der empfangenen Signale und programmierten Parameter, indem das Volumen des Ausdehnungsgefäßes (23) durch Regelung des Sauerstoffgasstroms durch das Steuerventil (11) innerhalb eines vorgegebenen Volumenintervalls gehalten wird.

8. Verfahren nach Anspruch 7, wobei das Verfahren Folgendes umfasst:
- graduelles Erhöhen des Drucks im Pufferbehälter (8) durch Zugabe von Wasserstoffgas in den Pufferbehälter (8),
- Betreiben des Elektrolysesystems (2) bei gleichem Druck wie im Pufferbehälter (8) während der graduellen Druckerhöhung, und
- wiederholte Kontrolle der Druckdifferenz durch Halten des Volumens des Expansionsgefäßes (23) innerhalb eines vorbestimmten Volumenintervalls durch Regulierung des Sauerstoffgasstroms über das Steuerventil (11) während der graduellen Druckerhöhung.

9. Verfahren nach Anspruch 8, wobei das Verfahren das wiederholte Aufzeichnen einer Position eines beweglichen Teils (24, 28) eines dehnbaren Gehäuses des Ausdehnungsgefäßes (23) umfasst, wobei die Position ein Indikator für das Volumen des Ausdehnungsgefäßes (23) ist, und das Halten der Positionen des beweglichen Teils (24, 28) innerhalb eines vorbestimmten Positionsintervalls durch Anpassen des Sauerstoffgasstroms durch das Steuerventil (11).

10. Verfahren nach Anspruch 9, wobei das Verfahren das Aktivieren eines Alarmschalters (27) mittels eines mechanischen Verbinders (26) umfasst, der den Alarmschalter (27) mit dem beweglichen Teil (24, 28) nur dann verbindet, wenn sich das bewegliche Teil (24, 28) über eine maximal zulässige Position hinaus bewegt und dadurch ein Notfallprogramm aktiviert, das mindestens eines der folgenden auslöst:
- Ablassen von Sauerstoff aus dem Ausdehnungsgefäß (23),
- Ablassen von Wasserstoff aus dem Pufferbehälter (8),
- Einstellung der Erzeugung von Wasserstoff.

## Revendications

1. Installation de production d'hydrogène (1) comprenant:
- un système d'électrolyse (2) configuré pour produire de l'hydrogène gazeux et de l'oxygène gazeux par électrolyse;
- un réservoir tampon (8) destiné à recevoir, accumuler et stocker le gaz hydrogène produit dans des conditions pressurisées;
- une vanne de régulation de débit d'oxygène actionnée par un actionneur (11) qui est reliée par un conduit d'oxygène (7A) au système d'électrolyse (2) pour libérer l'oxygène du système d'électrolyse (2) à travers le conduit d'oxygène (7A) puis à travers la vanne de régulation (11),
- un système de commande de fonctionnement automatisé (15) fonctionnellement connecté à la vanne de régulation (11) pour la commande automatisée de la libération de gaz oxygène;
dans lequel
- le système d'électrolyse (2) est situé à l'intérieur du réservoir tampon (8) et configuré pour fonctionner à une pression élevée, par rapport à la pression ambiante, correspondant à la pression du gaz de l'hydrogène sous pression accumulé dans le réservoir tampon (8),
- l'installation de production d'hydrogène (1) comprend en outre un vase d'expansion (23) dans lequel le conduit d'oxygène (7A) est connecté de manière fluidique au vase d'expansion (23), dont le volume est configuré pour changer en fonction des variations de pression entre le gaz oxygène à l'intérieur du vase d'expansion (23) et le gaz hydrogène dans le réservoir tampon (8);
**caractérisé en ce que**
- l'installation (1) comprend un système de capteurs (25) pour enregistrer les changements de volume du vase d'expansion (23) et pour fournir des signaux correspondants au système de commande (15);
- le système de commande (15) est configuré pour ajuster la libération de gaz oxygène par la vanne de régulation (11) sur la base des signaux du système de capteurs (25, 29) afin d'ajuster la différence de pression selon des paramètres programmés.

2. Installation selon la revendication 1, dans laquelle le vase d'expansion (23) présente une enceinte extensible comprenant une partie mobile (24, 28) configurée pour se déplacer lors du changement de volume ; dans laquelle le système de capteurs (25, 29) comprend un capteur qui enregistre les positions de la partie mobile ; et dans laquelle le système de commande (15) est configuré pour maintenir les positions de la partie mobile (24, 28) dans une plage de positions programmée en ajustant le débit de gaz oxygène à travers la vanne de régulation (11).

3. Installation selon la revendication 2, dans laquelle le système de capteurs (25, 29) comprend un capteur optique pour enregistrer les positions de la partie mobile.

4. Installation selon la revendication 2 ou 3, dans laquelle la partie mobile (24, 28) est flexible.

5. Installation selon l'une quelconque des revendications 2-4, dans laquelle un interrupteur d'alarme (27) est fourni et un connecteur mécanique (26) conçu pour relier l'interrupteur d'alarme (27) à la partie mobile (24, 28) et activer l'interrupteur d'alarme (27) lorsque la partie mobile (24, 28) dépasse une position maximale admissible, dans laquelle l'installation (1) est configurée pour déclencher un programme d'urgence automatisé suite à l'activation de l'interrupteur d'alarme (27), ce programme d'urgence incluant au moins une des actions suivantes:
- purge de l'oxygène du vase d'expansion (23),
- purge de l'hydrogène du réservoir tampon (8),
- arrêt de la production d'hydrogène.

6. Installation selon l'une quelconque des revendications 2-5, dans laquelle la partie mobile du vase d'expansion (23) est située à l'intérieur du réservoir tampon (8).

7. Procédé de fonctionnement d'un système d'électrolyse selon une quelconque revendication précédente, le procédé comprenant
- la fourniture d'une installation selon une quelconque revendication précédente,
- pendant le fonctionnement du système d'électrolyse (2), l'ajout de gaz hydrogène produit dans le réservoir tampon (8);
- l'enregistrement répété des changements de volume du vase d'expansion (23) par le système de capteurs (25, 29) et la fourniture de signaux correspondants au système de commande (15);
- sur la base des signaux reçus et des paramètres programmés, le contrôle de la différence entre la pression du gaz oxygène dans le vase d'expansion (23) et de la pression du gaz hydrogène dans le réservoir tampon (8) par le système de commande (15) en maintenant le volume du vase d'expansion (23) dans un intervalle prédéterminé de niveaux de volume en régulant le débit de gaz oxygène à travers la vanne de régulation (11).

8. Procédé selon la revendication 7, dans lequel le procédé comprend
- l'augmentation progressive de la pression à l'intérieur du réservoir tampon (8) en ajoutant du gaz hydrogène au réservoir tampon (8),
- l'actionnement du système d'électrolyse (2) à la même pression qu'à l'intérieur du réservoir tampon (8) pendant l'augmentation progressive de la pression, et
- le contrôle répété de la différence de pression en maintenant le volume du vase d'expansion (23) dans un intervalle prédéterminé de niveaux de volume en régulant le débit de gaz oxygène à travers la vanne de régulation (11), pendant l'augmentation progressive de la pression.

9. Procédé selon la revendication 8, dans lequel le procédé comprend l'enregistrement répété d'une position d'une partie mobile (24, 28) d'une enceinte extensible du vase d'expansion (23), la position étant indicative du volume du vase d'expansion (23), et le maintien des positions de la partie mobile (24, 28) dans un intervalle de positions prédéterminé en ajustant le débit de gaz oxygène à travers la vanne de régulation (11).

10. Procédé selon la revendication 9, dans lequel le procédé comprend l'activation d'un interrupteur d'alarme (27) par un connecteur mécanique (26) reliant l'interrupteur d'alarme (27) à la partie mobile (24, 28) uniquement lorsque la partie mobile (24, 28) dépasse une position maximale autorisée, et, à la suite de cette activation, le déclenchement d'un programme d'urgence et la réalisation d'au moins l'un des événements suivants:
- purge de l'oxygène du vase d'expansion (23),
- purge de l'hydrogène du réservoir tampon (8),
- arrêt de la production d'hydrogène.
